Europäisches Patentamt

European Patent Office

Office européen des brevets

(19)

(11) **EP 1 199 628 B1**

(12) **FASCICULE DE BREVET EUROPEEN**

(45) Date de publication et mention
de la délivrance du brevet:
**03.05.2006 Bulletin 2006/18**

(51) Int Cl.:
***G06F 7/72*** *(2006.01)*

(21) Numéro de dépôt: **01402606.6**

(22) Date de dépôt: **09.10.2001**

(54) **Unité de calcul dans laquelle on détermine l'inverse d'un entier modulo un grand nombre**

Recheneinheit zum Bestimmen der Inverse einer Ganzzahl Modulo einer grossen Zahl

Calculation unit for determining the inverse of an integer modulo of a big number

(84) Etats contractants désignés:
**AT BE CH CY DE DK ES FI FR GB GR IE IT LI LU
MC NL PT SE TR**

(30) Priorité: **19.10.2000 FR 0013373**

(43) Date de publication de la demande:
**24.04.2002 Bulletin 2002/17**

(73) Titulaire: **OBERTHUR CARD SYSTEMS SA**
**75017 Paris (FR)**

(72) Inventeur: **Knudsen, Erik**
**75011 Paris (FR)**

(74) Mandataire: **Santarelli**
**14, avenue de la Grande Armée,**
**B.P. 237**
**75822 Paris Cedex 17 (FR)**

(56) Documents cités:
• **LENSTRA A K: "Generating standard DSA
signatures without long inversion" ADVANCES
IN CRYPTOLOGY - ASIACRYPT'96
INTERNATIONAL CONFERENCE ON THE
THEORY AND APPLICATIONS OF CRYPTOLOGY
AND INFORMATION SECURITY. PROCEEDINGS,
ADVANCES IN CRYPTOLOGY - ASIACRYPT '96.
INTERNATIONAL CONFERENCE ON THE
THEORY AND APPLICATIONS OF CRYP, pages
57-64, XP002173817 1996, Berlin, Germany,
Springer-Verlag, Germany ISBN: 3-540-61872-4**

**Description**

L'invention se rapporte à une unité de calcul pour l'exécution d'au moins une partie d'un protocole cryptographique, dès lors que ce protocole inclut la détermination de l'inverse d'un entier modulo un grand nombre.

L'invention concerne plus particulièrement des moyens de détermination rapide d'un tel inverse.

On sait que dans certains protocoles cryptographiques, comme par exemple les protocoles connus sous l'abréviation DSA (pour Digital Signature Algorithm en anglais) ou encore ECDSA (pour Elliptic Curve DSA, en anglais) il est nécessaire de calculer de façon répétitive l'inverse modulo un grand nombre d'un entier choisi aléatoirement. Pour plus de détails sur ces protocoles, on peut se reporter à la publication IEEE P1363/D13 et plus particulièrement aux paragraphes 6.2.7 et 7.2.7. Ledit grand nombre sera désigné par N dans la suite de la description.

On rappelle que deux nombres sont inverses l'un de l'autre lorsque leur produit est identiquement égal à 1 modulo ledit grand nombre. Ainsi, à titre d'exemple, 3 et 5 sont inverses modulo 14. En effet, 3 x 5 = 15 ≡ 1 modulo 14.

Une méthode connue pour réaliser un tel calcul est fondée sur la relation suivante :

$$y = x^{-1} = x^{\varphi(N)-1} \text{ modulo N}$$

où $\varphi(N)$ est le nombre d'entiers premiers avec N et inférieurs à N. Il s'agit de la fonction "totient" d'Euler.

Si N est premier, on a la simplification suivante :

$$\varphi(N) = N - 1$$

et par conséquent :

$$y = x^{-1} = x^{N-2}$$

Ce calcul, en binaire, demande 3n/2 multiplications de n x n bits avec n = $\log_2$ N, c'est-à-dire de l'ordre de 160, en pratique.

L'article de A.K. LENSTRA intitulé "Generating standard DSA signatures without long inversion", Advances in Cryptology, Asiacrypt'96 International Conference on the Theory and Applications of Cryptology and information Security, Proceedings, pages 57-64, 1996, Springer-Verlag, Berlin, Allemagne, montre comment la génération d'un entier aléatoire k modulo q et le calcul consécutif de k-1 mod q durant la phase de signature de l'algorithme de signature numérique (DSA) NIST peut être remplacée par la génération simultanée d'un couple (k, k-1 mod q).

L'invention propose une méthode de calcul complètement différente et plus rapide, dans laquelle on élabore en même temps deux nombres inverses l'un de l'autre modulo N, obtenus par un calcul spécifique, effectué par exemple à partir d'un nombre choisi de façon aléatoire.

Plus précisément, l'invention propose une unité de calcul conforme à la revendication 1.

On rappelle que deux nombres sont premiers entre eux s'ils n'ont aucun diviseur commun.

Des caractéristiques additionnelles de l'invention sont énoncées dans les revendications dépendantes.

En particulier, selon un mode de réalisation, les nombres constituant la série de nombres binaires mentionnée dans la revendication 1 sont pré-calculés au cours d'une phase préparatoire qui n'a pas à être réexécutée à chaque calcul d'un couple de nombres inverses l'un de l'autre, modulo N.

Selon un autre mode de réalisation, les moyens adaptés à obtenir ladite série comportent des moyens de génération en temps réel d'au moins certains nombres de ladite série.

En effet, lorsqu'il est possible de calculer la plupart des nombres de l'ensemble en mettant en oeuvre une fonction d'exécution rapide, on gagne du temps par rapport à un mode de réalisation dans lequel les nombres sont lus dans une mémoire.

Si tous les nombres de la série doivent être mémorisés, les moyens de pré-calcul sont mis en oeuvre une fois et tous les résultats sont mémorisés. En revanche, si certains nombres de l'ensemble sont obtenus par un calcul rapide, les moyens de pré-calcul sont mis en oeuvre pour choisir les nombres de l'ensemble qui pourront être recalculés à chaque fois, à partir de la mise en oeuvre d'une fonction dite d'exécution rapide. C'est le choix des nombres de ladite série qui permettra de "trouver" une fonction d'exécution rapide adéquate. Lorsque cette fonction est déterminée et "implémentée", il suffit généralement de mémoriser d'une part un nombre dudit ensemble constituant un point de départ du calcul des autres nombres dudit ensemble, et d'autre part, ledit inverse du produit des nombres dudit ensemble (modulo N). On dispose alors de tous les éléments nécessaires pour obtenir les nombres de ladite série, essentiellement par le calcul.

A titre d'exemple, l'unité de calcul peut comporter des moyens de mémorisation contenant d'une part, le plus petit nombre dudit ensemble et d'autre part, l'inverse du produit des nombres dudit ensemble, modulo ledit grand nombre N, tandis que les moyens de génération précités peuvent comporter des moyens pour appliquer une fonction d'exécution rapide, c'est-à-dire des moyens d'addition adaptés à obtenir une succession de nombres constituant ledit ensemble successivement en partant dudit plus petit nombre, ladite série étant formée par ces nombres et ledit inverse.

A titre d'exemple préférentiel, ladite fonction d'exécution rapide peut consister à obtenir chaque nombre en ajoutant 1 au précédent. Ce type de fonction d'exécution rapide peut être retenu, notamment, lorsque le nombre N est premier. Si ce n'est pas le cas, il est souvent possible de trouver un intervalle de nombres où tous les nombres consécutifs sont premiers avec ledit grand nombre N et inférieurs à celui-ci.

La présente invention propose également un dispositif de cryptographie conforme à la revendication 10 et un dispositif de cryptographie conforme à la revendication 11.

L'invention sera mieux comprise et d'autres avantages de celle-ci apparaîtront plus clairement à la lumière de la description qui va suivre, de plusieurs modes de réalisation d'une unité de calcul conforme à son principe, donnée uniquement à titre d'exemple et faite en référence aux dessins annexés dans lesquels :

- la figure 1 est un organigramme illustrant différentes étapes de calcul pour obtenir deux nombres inverses l'un de l'autre modulo un grand nombre N ;
- la figure 2 est un schéma-bloc illustrant un premier mode de réalisation d'une unité de calcul conforme à l'invention ; et
- la figure 3 est un schéma-bloc illustrant un autre mode de réalisation d'une unité de calcul conforme à l'invention.

Le fonctionnement de l'unité de calcul définie plus haut se justifie par la démonstration suivante :

- Soit $S_0$ l'inverse modulo N du produit d'un ensemble de k nombres entiers $S_1$ à $S_k$ tous premiers avec ledit grand nombre N et inférieurs à N,

- Soit : $$S_0 = \left( \prod_{i=1}^{k} S_i \right)^{-1} \text{ modulo } N$$

on démontre que $S_0$ est aussi premier avec N,
on vérifie aisément que :

$$\prod_{i=0}^{k} S_i \equiv 1 \text{ modulo } N$$

Par conséquent, si on partage de façon aléatoire les k + 1 nombres $S_i$ de ce produit en deux groupes de nombres et si on fait respectivement les produits $\Pi_1$ et $\Pi_2$ des nombres de ces deux groupes, alors les deux nombres x et y qui résultent de ces produits $\Pi_1$ et $\Pi_2$ sont inverses l'un de l'autre modulo N.

Autrement dit, le principe de base de l'invention conduit par exemple à choisir un nombre k et un grand nombre N puis, dans une phase de pré-calcul, à déterminer, d'une part, un ensemble de k nombres $S_1$ .... $S_k$ tous inférieurs à N et premiers avec N et, d'autre part, un nombre supplémentaire $S_0$ qui constitue l'inverse du produit des nombres $S_1$ ... $S_k$ modulo N. Lorsque ce pré-calcul est effectué, on dispose d'une série de k + 1 nombres binaires. Ces nombres peuvent par exemple être mémorisés pour être utilisés chaque fois qu'il est nécessaire, au cours du déroulement d'un calcul cryptographique de déterminer deux nombres x, y inverses l'un de l'autre modulo N.

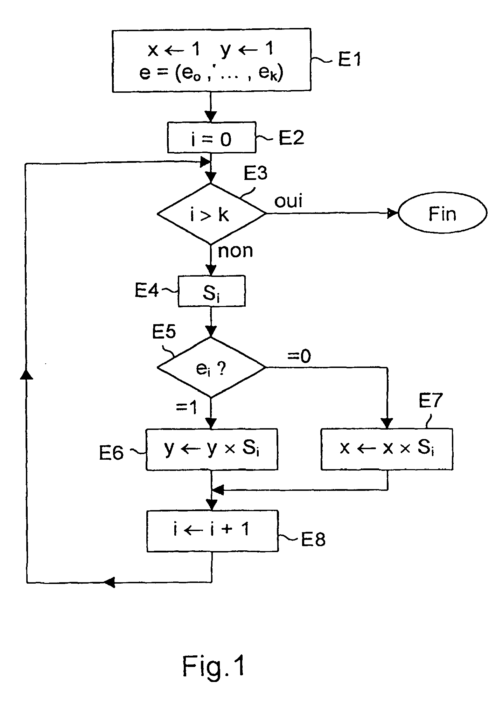

Pour la phase de calcul proprement dite, on peut procéder conformément à l'organigramme de la figure 1.

- L'étape $E_1$ est une phase d'initialisation où deux valeurs x et y sont initialisées à 1 (qui est l'élément neutre de la multiplication).

De plus, un nombre binaire e de k + 1 bits est choisi de façon aléatoire, il se compose donc de k + 1 éléments ($e_0$ .... $e_k$) chacun valant 0 ou 1.

- L'étape $E_2$ consiste à initialiser à 0 un compteur i.
- L'étape $E_3$ est un test où on vérifie si l'indice i est supérieur à k. Un test positif indique que le calcul est terminé. Un test négatif conduit à l'étape $E_5$.
- L'étape $E_4$ consiste à "obtenir" le nombre $S_i$. Si les nombres $S_i$ ont été mémorisés, cette opération consiste simplement à lire l'un des nombres dans une mémoire. Cependant, comme on l'a indiqué ci-dessus, il est possible de calculer en temps réel la plupart des nombres $S_i$ (à l'exception de $S_0$ qui fait l'objet d'un pré-calcul particulier). Par conséquent, l'étape $E_3$ peut consister soit à lire une valeur dans une mémoire, soit à la recalculer en mettant en oeuvre une fonction dite "d'exécution rapide".
- A l'étape $E_5$, on détermine la valeur du $i^{ème}$ bit du nombre e choisi aléatoirement. Si ce bit est égal à 1, on passe à l'étape $E_6$. Si le bit est égal à 0, on passe à l'étape $E_7$.
- A l'étape $E_6$, on multiplie le nombre $S_i$ par la valeur précédente de y et le résultat devient la nouvelle valeur de y. On passe ensuite à l'étape $E_8$.
- A l'étape $E_7$, on multiplie le nombre $S_i$ par la valeur précédente de x et le résultat devient la nouvelle valeur de x. On passe ensuite à l'étape $E_8$.
- A l'étape $E_8$, on incrémente i d'une unité et on revient à l'étape $E_3$ où on vérifie si l'indice i est supérieur à k.

Lorsque le test $E_4$ devient positif, les valeurs x et y représentent les deux nombres inverses l'un de l'autre, modulo N, recherchés.

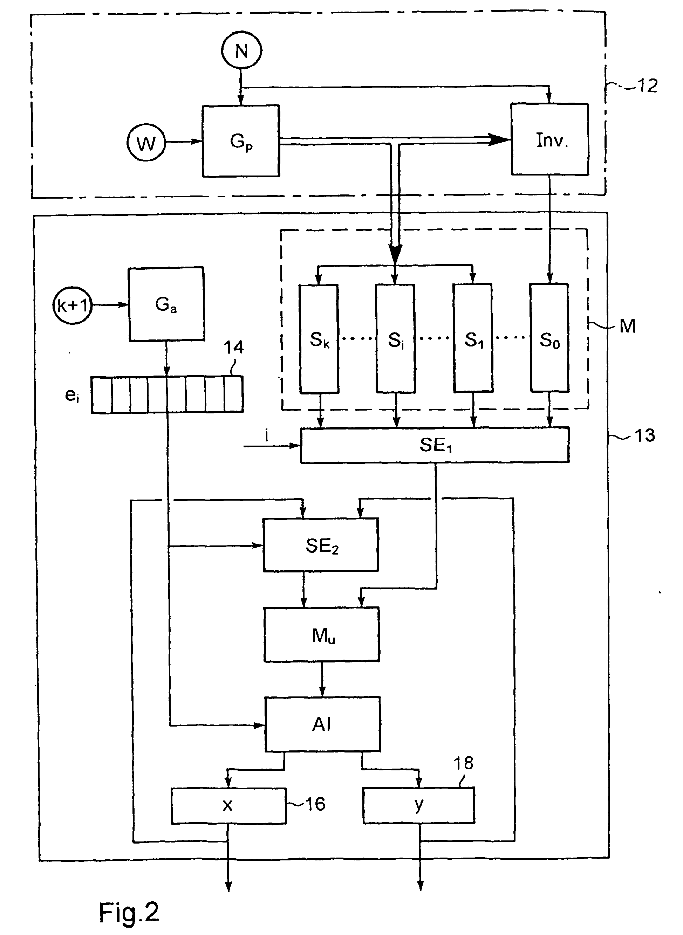

La figure 2 représente un schéma-bloc illustrant des moyens permettant de mettre en oeuvre l'algorithme explicité par l'organigramme de la figure 1. Le bloc 12 représente les moyens de pré-calcul tandis que le bloc 13 représente les moyens de calcul proprement dit.

Les moyens de pré-calcul comportent un générateur Gp de nombres premiers avec ledit grand nombre N. Ces nombres se présentent sous la forme de mots de w bits. Au fur et à mesure que ce générateur Gp élabore une succession de nombres premiers avec N, ces nombres $S_1$ ... $S_i$ ... $S_k$ sont mémorisés dans une mémoire M qui fait partie des moyens de calcul 13.

Parallèlement, les nombres $S_1$-$S_k$ sont adressés à un circuit Inv qui calcule le nombre $S_0$. On rappelle que le nombre $S_0$ est l'inverse du produit des nombres $S_1$ à $S_k$. Lorsque ce calcul est achevé, la valeur de $S_0$ est mémorisée dans la mémoire M. A partir de ce moment, les moyens de pré-calcul peuvent être déconnectés des moyens de calcul 13 puisque les valeurs des nombres $S_0$-$S_k$ sont mémorisées dans la mémoire M. L'unité de calcul comporte un générateur de nombres aléatoires Ga (de k + 1 bits) qui est connecté à un registre 14 appelé à contenir un nombre aléatoire e, de k + 1 bits. Au début du processus de calcul, le générateur Ga inscrit ce nombre aléatoire dans le registre 14.

Par ailleurs, la mémoire M est reliée à un sélecteur $SE_1$ dont la sortie est reliée à une des entrées d'un multiplicateur Mu. Un sélecteur $SE_2$ a sa sortie reliée à l'autre entrée du multiplicateur Mu. La sortie du multiplicateur est reliée à une entrée d'un aiguilleur AI qui comporte deux sorties respectivement reliées à des entrées de deux registres 16, 18 où s'inscrivent deux variables x et y qui sont les résultats de produits de nombres de la série $S_0$-$S_k$. Les deux sorties des registres x et y sont rebouclées sur les deux entrées du sélecteur $SE_2$. La lecture bit à bit du registre 14 commande à la fois le positionnement du sélecteur $SE_2$ et de l'aiguilleur AI.

Plus précisément, les bits $e_0$ ... $e_i$... $e_k$ du registre 14 sont scrutés à chaque itération et si le bit $e_i$ considéré est égal à 1 alors, le sélecteur $SE_2$ relie la sortie du registre 16 à une entrée du multiplicateur Mu et l'aiguilleur AI relie la sortie du multiplicateur Mu à l'entrée du registre 16. De façon analogue, si $e_i$ vaut 0, alors, le sélecteur $SE_2$ relie la sortie du registre 18 à l'entrée du multiplicateur Mu et l'aiguilleur AI relie la sortie du multiplicateur Mu à l'entrée du registre 18.

Parallèlement, le sélecteur $SE_1$ adresse successivement, à chaque itération, l'un des nombres $S_0$-$S_k$ à l'autre entrée du multiplicateur Mu.

Par conséquent, à chaque itération, le contenu d'un registre 16 ou 18 (selon la valeur de $e_i$) est multiplié par un nombre $S_i$ et le résultant vient s'inscrire dans le même registre en écrasant la valeur précédente. Lorsque tous les nombres $S_0$-$S_k$ ont été exploités, les registres 16 et 18 contiennent deux nombres inverses l'un de l'autre modulo N.

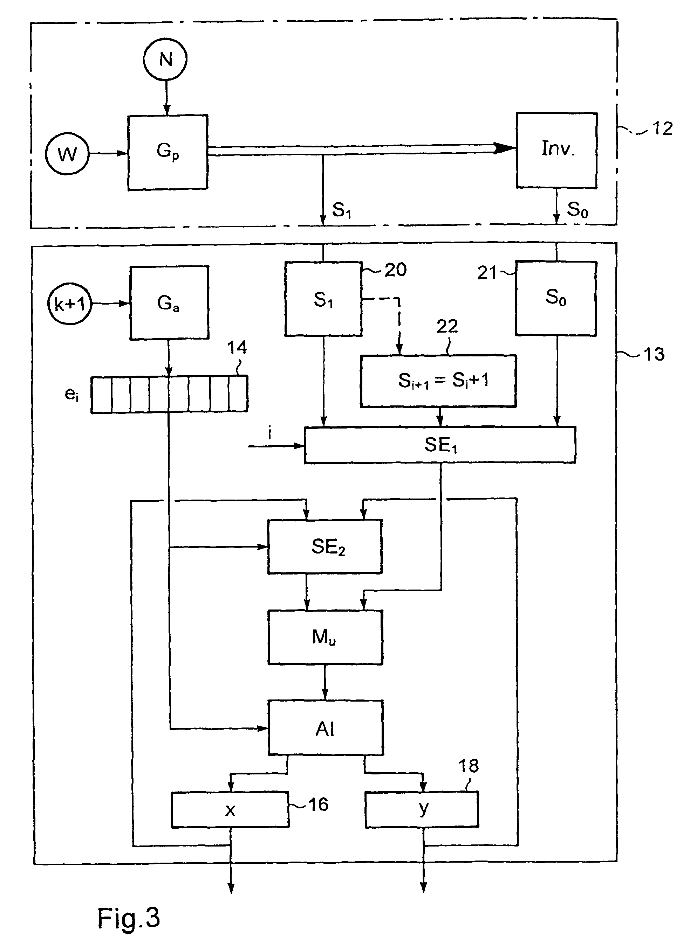

La figure 3 illustre une variante qui se distingue du mode de réalisation de la figure 2 essentiellement dans la façon dont on obtient les nombres $S_i$. Globalement, les moyens de pré-calcul 12 sont identiques à ceux du mode de réalisation de la figure 1, c'est-à-dire qu'ils comportent essentiellement un générateur de nombres premiers avec ledit grand nombre N et un circuit Inv permettant d'élaborer le nombre $S_0$ à partir des nombres $S_1$-$S_k$.

Dans l'exemple, cependant, le nombre N est choisi parmi les nombres premiers. Par conséquent, toute suite de nombres consécutifs $S_i$ est une suite de nombres premiers avec N. Il est donc possible de définir une fonction d'exécution rapide qui consiste simplement à obtenir l'un des nombres en ajoutant 1 au nombre $S_i$ précédemment obtenu, soit :

$$S_{i+1} = S_i + 1$$

Dans ce cas, le plus petit nombre $S_1$ dudit ensemble est un nombre quelconque choisi.

Il est donc inutile que l'ensemble des $S_i$ déterminés par les moyens de pré-calculs 12 soient transférés et mémorisés pour être exploités par les moyens de calcul 13. Il suffit simplement de mémoriser le plus petit nombre $S_1$, dudit ensemble, ainsi que le nombre $S_0$ calculé par le circuit Inv.

A partir de ces deux nombres mémorisés dans deux registres 20, 21 des moyens de calcul 13, il suffit de compléter ces moyens de calcul par des moyens 22 pour appliquer une fonction d'exécution rapide, à savoir ici la fonction $S_{I+1} = S_I + 1$.

Dans ces conditions le sélecteur $SE_1$ est connecté à la sortie des moyens 22 et aux sorties des deux registres 20 et 21. Autrement dit, dans la série des nombres $S_0$ ... $S_k$, seuls les nombres $S_0$ et $S_1$ seront lus dans des registres et tous les autres, de $S_2$ à $S_k$ seront calculés en temps réel par les moyens 22. Il se trouve que le fait d'obtenir la plus grande partie des nombres $S_i$ par un calcul rapide du genre indiqué ci-dessus, permet de gagner du temps par rapport au mode de réalisation précédent qui consiste à lire chaque nombre dans une mémoire.

Mis à part les moyens connectés au sélecteur $SE_1$, le reste des moyens de calcul 13 est identique au mode de réalisation de la figure 2, c'est pourquoi il ne sera pas décrit en détail à nouveau. Le fonctionnement est également identique dès lors que le sélecteur $SE_1$ est capable, à chaque itération du calcul, de "présenter" les nombres $S_i$ successifs à l'entrée correspondante du multiplicateur Mu.

Il est à noter que le mode de réalisation de la figure 3 peut aussi donner satisfaction même si le nombre N n'est pas un nombre premier. Dans ce cas, il est généralement possible de déterminer une succession de k nombres entiers consécutifs tous premiers avec le nombre N.

Cette condition sera réalisée notamment dans le cas où le plus petit facteur premier de N (noté p) est plus grand que $S_1$ + (k -1).

Dans ce cas, comme p est un nombre premier, la suite $S_1$, $S_1$ + 1, .. $S_1$+ k-1 est formée de k nombres entiers consécutifs premiers avec p, donc premiers avec N. Dans ce cas, les moyens 20 pour appliquer la fonction d'exécution rapide telle que décrite, c'est-à-dire :

$$S_{i+1} = S_i + 1$$

est applicable.

Si la condition ci-dessus n'est pas réalisée, c'est-à-dire si $p \leq S_1 + (k-1)$ on choisit $S_1$ premier avec p puisque p est premier et, à chaque fois, on ajoute 1 à $S_i$. On teste si le nombre obtenu est premier avec p et on ne retient que les nombres premiers avec p. Dans ce cas, on obtient, non pas une suite de nombres consécutifs mais un certain nombre de groupes de nombres consécutifs, tous premiers avec N. Il suffit alors de modifier en conséquence la définition de la fonction d'exécution rapide, pour pouvoir recalculer en temps réel, chaque fois que nécessaire, l'ensemble des nombres $S_2$ à $S_k$.

Plus généralement, chaque fois qu'il est possible de définir une fonction d'exécution rapide à partir d'une sélection judicieuse des nombres premiers avec N délivrés par le générateur Gp, un mode de réalisation du type décrit à la figure 3 pourra s'appliquer.

Il est à noter en outre, qu'il est avantageux de choisir les nombres de ladite série parmi les nombres les plus petits qui soient tous premiers avec ledit grand nombre N et inférieurs à celui-ci. A titre d'ordre de grandeur, ledit grand nombre N peut être un nombre binaire de 163 bits, le nombre w peut être égal à 32 et k peut être égal à 160.

**Revendications**

1. Unité de calcul agencée pour exécuter au moins une partie d'un protocole cryptographique incluant la détermination de l'inverse d'un entier modulo un grand nombre (N), **caractérisée en ce qu'**elle comprend :

   - des moyens (12, M, $SE_1$) adaptés à obtenir une série de nombres binaires ($S_0$, $S_k$) premiers avec ledit grand nombre et inférieurs à celui-ci, un nombre ($S_0$) de la série étant inverse du produit des autres, modulo ledit grand nombre (N),
   - des moyens (Ga, 14) adaptés à répartir aléatoirement tous les nombres de ladite série dans l'un ou l'autre de deux groupes et
   - des moyens (Mu, 16, 18) adaptés à multiplier les nombres de chaque groupe, ces produits constituant deux nombres inverses l'un de l'autre recherchés,

   ladite unité de calcul étant en outre **caractérisée en ce que** :

   - lesdits moyens (12, M, $SE_1$) adaptés à obtenir ladite série comportent des moyens adaptés à précalculer et à mémoriser $S_0$ défini comme

$$S_0 = \left( \prod_{i=1}^{k} S_i \right)^{-1} \text{ modulo N },$$

   - lesdits moyens (12, M, $SE_1$) adaptés à obtenir ladite série comportent des moyens adaptés à précalculer et à mémoriser au moins un des nombres binaires ($S_i$ avec $1 \leq i \leq k$) premiers avec ledit grand nombre (N),
   - lesdits moyens (Mu, 16, 18) adaptés à multiplier les nombres de chaque groupe sont adaptés à calculer les produits des nombres de chaque groupe à partir des nombres ($S_0$, $S_i$) mémorisés.

2. Unité de calcul selon la revendication 1, **caractérisée en ce qu'**elle comprend :

   - des moyens (Ga, 14) adaptés à engendrer un nombre binaire (e) aléatoire,
   - des moyens (16, 18) adaptés à représenter deux nombres recherchés (x, y), la valeur des deux nombres recherchés étant adaptée à être initialisée à 1 au début de chaque calcul,
   - des moyens ($SE_1$, $SE_2$) adaptés à sélectionner, rang par rang, un bit dudit nombre binaire aléatoire et un nombre correspondant de ladite série, et
   - des moyens (Mu) adaptés à multiplier la valeur actuelle de l'un des deux nombres recherchés par ledit nombre correspondant si ledit bit est égal à 0 ou pour multiplier la valeur actuelle de l'autre des deux nombres recherchés par ledit nombre correspondant si ledit bit est égal à 1, le résultat de ladite multiplication constituant la nouvelle valeur actuelle de l'un ou l'autre des deux nombres recherchés, respectivement et ces opérations étant effectuées pour toutes les sélections précitées, les valeurs actuelles finales, contenues dans lesdits moyens pour représenter deux nombres, constituant les deux nombres inverses l'un de l'autre recherchés.

3. Unité de calcul selon la revendication 1 ou 2, **caractérisée en ce que** lesdits moyens de pré-calcul comportent des moyens (Gp) adaptés à déterminer un ensemble de nombres, premiers avec ledit grand nombre (N), cet ensemble constituant des nombres de ladite série et des moyens adaptés à déterminer l'inverse du produit des nombres dudit ensemble, modulo ledit grand nombre (N), cet inverse constituant un nombre de ladite série.

4. Unité de calcul selon la revendication 1, 2 ou 3, **caractérisée en ce que** lesdits moyens adaptés à obtenir ladite série comportent des moyens de mémorisation (M) des nombres de celle-ci.

**5.** Unité de calcul selon la revendication 1, 2 ou 3, **caractérisée en ce que** lesdits moyens adaptés à obtenir ladite série comportent des moyens de génération en temps réel, à partir des nombres ($S_0$, $S_i$) stockés, de plusieurs nombres de ladite série.

**6.** Unité de calcul selon la revendication 5, **caractérisée en ce qu'**elle comporte des moyens de mémorisation (20, 21) contenant, d'une part le plus petit nombre dudit ensemble et d'autre part, l'inverse du produit des nombres dudit ensemble, modulo ledit grand nombre (N) et **en ce que** lesdits moyens de génération comportent des moyens d'addition (22) adaptés à obtenir une succession de nombres constituant ledit ensemble successivement en partant dudit plus petit nombre, ladite série étant formée par ces nombres et ledit inverse.

**7.** Unité de calcul selon la revendication 6, **caractérisée en ce que** lesdits moyens d'addition (22) sont adaptés à obtenir chaque nombre en ajoutant 1 au précédent.

**8.** Unité de calcul selon la revendication 7, **caractérisée en ce que** ledit grand nombre (N) étant un nombre premier choisi, ledit plus petit nombre dudit ensemble, contenu dans lesdits moyens de mémorisation, est un nombre quelconque choisi.

**9.** Unité de calcul selon la revendication 7, **caractérisée en ce que** ledit grand nombre (N) étant un nombre quelconque choisi, ledit plus petit nombre dudit ensemble est le plus petit nombre d'un ensemble précité de nombres consécutifs choisis dans un intervalle de nombres entiers consécutifs, tous premiers avec ledit grand nombre.

**10.** Dispositif de cryptographie, **caractérisé en ce qu'**il comprend des moyens adaptés à exécuter un protocole cryptographique du type dit "DSA" et incluant une unité de calcul selon l'une des revendications précédentes.

**11.** Dispositif de cryptographie, **caractérisé en ce qu'**il comprend des moyens adaptés à exécuter un protocole cryptographique du type dit "ECDSA" et incluant une unité de calcul selon l'une des revendications 1 à 9.

**Claims**

**1.** A calculation unit adapted to execute at least one part of a cryptographic protocol including determining the inverse of an integer modulo a large number (N), **characterized in that** it includes:

- means (12, M, $SE_1$) for providing a series of binary numbers ($S_0$, $S_k$) that are prime with and less than said large number, a number ($S_0$) from the series being the inverse of the product of the others modulo said large number (N),
- means (Ga, 14) for dividing all the numbers of said series into two groups at random, and
- means (Mu, 16, 18) for effecting the products of the numbers of each group, the results of such products constituting two of the required numbers that are the inverse of each other,

said calculation unit being further **characterized in that**:

- said means (12, M, $SE_1$) for providing said series include means adapted to precalculate and to store $S_0$ defined as follows:

$$S_0 = \left( \prod_{i=1}^{k} S_i \right)^{-1} \text{ modulo N,}$$

- said means (12, M, $SE_1$) for providing said series include means adapted to precalculate and to store at least one of the binary numbers ($S_i$ where $1 \leq i \leq k$) prime with said large number (N),
- said means (Mu, 16, 18) adapted to effect the products of the numbers of each group are adapted to calculate the products of the numbers of each group from the stored numbers ($S_0$, $S_i$).

**2.** A calculation unit according to claim 1, **characterized in that** it includes:

- means (Ga, 14) for generating a random binary number (e),
- means (16, 18) for representing two of the required numbers (x, y), the value of the two required numbers being adapted to be initialized to 1 at the beginning of each calculation,
- means ($SE_1$, $SE_2$) for selecting bits of said random binary number one-by-one and a corresponding number from said series, and
- means (Mu) for multiplying the current value of one of the required two numbers by said corresponding number if said bit is equal to 0 or for multiplying the current value of the other of the required two numbers by said corresponding number if said bit is equal to 1, the result of said multiplication constituting the new current value of one or the other of the required two numbers, respectively, and the above operations being effected for all the aforementioned selections, the final current values contained in said means representing two numbers constituting the required two numbers that are the inverse of each other.

3. A calculation unit according to claim 1 or 2, **characterized in that** said precalculation means include means (Gp) for determining a set of numbers that are prime with said large number (N), said set constituting numbers of said series, and means for determining the inverse of the product of numbers of said set modulo said large number (N), said inverse constituting a number from said series.

4. A calculation unit according to claim 1, 2 or 3, **characterized in that** said means for obtaining said series include means (M) for storing the numbers thereof.

5. A calculation unit according to claim 1, 2 or 3, **characterized in that** said means for obtaining said series include means for generating some numbers of said series in real time from the numbers $(S_0, S_i)$ stored.

6. A calculation unit according to claim 5, **characterized in that** it includes storage means (20, 21) containing, on the one hand, the smallest number of said set and, on the other hand, the inverse of the product of the numbers of said set modulo said large number (N), and **in that** said generator means include addition means (22) for, starting from said smallest number, obtaining a succession of numbers constituting said set, said series being formed by said numbers and said inverse.

7. A calculation unit according to claim 6, **characterized in that** said addition means (22) are adapted to obtain each number by adding 1 to the preceding number.

8. A calculation unit according to claim 7, **characterized in that** said large number (N) is a chosen prime number and said smallest number of said set contained in said storage means is any chosen number.

9. A calculation unit according to claim 7, **characterized in that** said large number (N) is any chosen number and said smallest number of said set is the smallest number of an aforementioned set of consecutive numbers chosen in a range of consecutive integers all of which are prime with said large number.

10. A cryptographic device, **characterized in that** it includes means for executing a DSA cryptographic protocol and including a calculation unit according to any preceding claim.

11. A cryptographic device, **characterized in that** it includes means for executing an ECDSA cryptographic protocol and including a calculation unit according to any of claims 1 to 9.

**Patentansprüche**

1. Recheneinheit, die aufgebaut ist, um wenigstens ein Teil eines kryptographischen Protokolls auszuführen, beinhaltend die Bestimmung der Inversen eine ganzzahligen bzw. Ganzzahl Modulo einer großen Zahl (N), **dadurch gekennzeichnet, daß** sie umfaßt:

 - Mittel (12, M, $SE_1$), die adaptiert sind, eine Serie von binären Zahlen $(S_0, S_k)$, welche primär zu der großen Zahl sind bzw. mit dieser keinen gemeinsamen Divisor haben, und kleiner als diese zu erhalten, wobei eine Zahl $(S_0)$ der Serie das Inverse des Produkts der anderen Modulo dieser großen Zahl (N) ist,
 - Mittel (Ga, 14), die adaptiert sind, aleatorisch bzw. zufällig sämtliche Zahlen der Serie in die eine oder die andere von zwei Gruppen zu verteilen, und
 - Mittel (Mu, 16, 18) die adaptiert sind, die Zahlen von jeder Gruppe zu multiplizieren, wobei die Produkte zwei zueinander inverse gesuchte Zahlen bilden, wobei die Recheneinheit darüber hinaus **dadurch gekennzeichnet ist, daß**:
- die Mittel (12, M, $SE_1$), die adaptiert sind, die Serie zu erhalten, Mittel umfassen, die adaptiert sind, um $S_0$, das als

$$S_0 = \left( \prod_{i=1}^{k} S_i \right)^{-1} \text{ModuloN}$$

definiert ist, vorab zu berechnen und zu speichern,

 - die Mittel (12, M, $SE_1$), die adaptiert sind, um die Serie zu erhalten, Mittel umfassen, die adaptiert sind, um wenigstens eine der binären Zahlen ($S_i$ mit $1 \leq i \leq k$), welche zu der großen Zahl (N) primär sind, vorzuberechnen und zu speichern,
 - die Mittel (Mu, 16, 18), die adaptiert sind, die Zahlen von jeder Gruppe zu multiplizieren, adaptiert sind, die Produkte der Zahlen von jeder Gruppe, ausgehend von den gespeicherten Zahlen $(S_0, S_i)$ zu berechnen.

2. Recheneinheit nach Anspruch 1, **dadurch gekennzeichnet, daß** sie umfaßt:

 - Mittel (Ga, 14), die adaptiert sind, eine aleatorische bzw. zufällige binäre Zahl (e) zu erzeugen,
 - Mittel (16, 18), die adaptiert sind, zwei gesuchte Zahlen (x, y) darzustellen, wobei der Wert der gesuchten Zahlen adaptiert ist, um mit 1 am Beginn jeder Berechnung initialisiert zu sein,

- Mittel (SE$_1$, SE$_2$), die adaptiert sind, rangweise ein Bit der zufälligen binären Zahl und eine entsprechende Zahl der Serie auszuwählen, und
- Mittel (Mu), die adaptiert sind, den tatsächlichen bzw. aktuellen Wert jeweils von einer der zwei gesuchten Zahlen mit der entsprechenden Zahl zu multiplizieren, wenn das Bit gleich 0 ist, oder den tatsächlichen Wert der anderen der zwei gesuchten Zahlen mit der entsprechenden Zahl zu multiplizieren, wenn das Bit gleich 1 ist, wobei das Resultat dieser Multiplikation jeweils den neuen aktuellen Wert der einen oder der anderen der zwei gesuchten Zahlen bildet bzw. darstellt, und wobei diese Operationen für sämtliche vorgenannten Auswahlen durchgeführt werden, wobei die tatsächlichen bzw. aktuellen Endwerte, die in den Mitteln zum Darstellen von zwei Zahlen enthalten sind, die zueinander inversen gesuchten Zahl ausbilden bzw. repräsentieren.

3. Recheneinheit nach Anspruch 1 oder 2, **dadurch gekennzeichnet, daß** die Vorberechnungsmittel Mittel (Gp) umfassen, die adaptiert sind, um eine Gesamtheit von Zahlen, welche zu der großen Zahl (N) primär sind, zu bestimmen, wobei die Gesamtheit Zahlen der Serie ausbildet, und Mittel umfassen, die adaptiert sind, um das Inverse des Produkts der Zahlen der Gesamtheit Modulo der großen Zahl (N) zu bestimmen, wobei diese eine Zahl dieser Serie ausbildet.

4. Recheneinheit nach Anspruch 1, 2 oder 3, **dadurch gekennzeichnet, daß** die Mittel, die adaptiert sind, die Serie zu erhalten, Mittel zum Speichern (M) der Zahlen derselben umfassen.

5. Recheneinheit nach Anspruch 1, 2 oder 3, **dadurch gekennzeichnet, daß** die Mittel, die adaptiert sind, die Serie zu erhalten, Mittel zum Generieren in Echtzeit, ausgehend von gespeicherten Zahlen (S$_0$, S$_i$), mehrerer Zahlen der Serie umfassen.

6. Recheneinheit nach Anspruch 5, **dadurch gekennzeichnet, daß** sie Speichermittel (20, 21) umfaßt, die einerseits die kleinste Zahl der Gesamtheit und andererseits die Inverse des Produkts der Zahlen der Gesamtheit Modulo der großen Zahl (N) enthalten, und daß die Mittel zum Generieren Additionsmittel (22) umfassen, die adaptiert sind, eine Aufeinanderfolge von Zahlen zu erhalten, die die Gesamtheit aufeinanderfolgend ausgehend von der kleinsten Zahl darstellt, wobei die Serie durch diese Zahlen und ihr Inverses gebildet ist.

7. Recheneinheit nach Anspruch 6, **dadurch gekennzeichnet, daß** die Additionsmittel (22) adaptiert sind, jede Zahl durch Hinzufügen von 1 zu der vorhergehenden zu erhalten.

8. Recheneinheit nach Anspruch 7, **dadurch gekennzeichnet, daß** die große Zahl (N) eine gewählte Primzahl ist, wobei die kleinste Zahl der Gesamtheit, die in den Speichermitteln enthalten ist, eine beliebig gewählte Zahl ist.

9. Recheneinheit nach Anspruch 7, **dadurch gekennzeichnet, daß**, wobei die große Zahl (N) eine beliebig gewählte Zahl ist, die kleinste Zahl der Gesamtheit die kleinste Zahl einer vorgenannten Gesamtheit von aufeinanderfolgenden Zahlen ist, die in einem Intervall von aufeinanderfolgenden ganzen Zahlen gewählt ist, die alle primär zu der großen Zahl sind.

10. Kryptographische Vorrichtung, **dadurch gekennzeichnet, daß** sie Mittel umfaßt, die adaptiert sind, ein kryptographisches Protokoll der Art auszuführen, die "DSA" genannt ist, und beinhaltend eine Recheneinheit nach einem der vorhergehenden Ansprüche.

11. Kryptographische Vorrichtung, **dadurch gekennzeichnet, daß** sie Mittel umfaßt, die zum Ausführen eines kryptographischen Protokolls der Art adaptiert sind, die "ECDSA" genannt ist, und beinhaltend eine Recheneinheit nach einem der Ansprüche 1 bis 9.

$$x \leftarrow 1 \quad y \leftarrow 1$$
$$e = (e_o , \ldots , e_k)$$
E1

$$i = 0$$ E2

E3

$$i > k$$
oui
Fin

non

E4 — $$S_i$$

E5

$$e_i ?$$
=0

=1
E7

E6 — $$y \leftarrow y \times S_i$$
$$x \leftarrow x \times S_i$$

$$i \leftarrow i + 1$$ E8

Fig.1

Fig.2

Fig.3